(19) **Europäisches Patentamt**
**European Patent Office**
**Office européen des brevets**

(11) **EP 1 803 605 B1**

(12) **EUROPEAN PATENT SPECIFICATION**

(45) Date of publication and mention
of the grant of the patent:
**25.08.2010 Bulletin 2010/34**

(51) Int Cl.:
**B60N 2/427** *(2006.01)*

(21) Application number: **05113065.6**

(22) Date of filing: **29.12.2005**

(54) **Impact absorbing structure in a back rest of vechicle seat**

Stossabsorbierende Struktur in einer Rückenlehne eines Fahrzeugsitzes

Structure absorbant des chocs dans le dossier d'un siège de véhicule

(84) Designated Contracting States:
**DE GB SE**

(43) Date of publication of application:
**04.07.2007 Bulletin 2007/27**

(73) Proprietor: **Ford Global Technologies, LLC**
**Dearborn, MI 48126 (US)**

(72) Inventors:
• **Augustsson, Tommie**
**511 58 Kinna (SE)**

• **Wiberg, Henrik**
**414 59 Göteborg (SE)**

(74) Representative: **Ekström, Nils et al**
**Albihns.Zacco**
**Torggatan 8**
**Box 142**
**401 22 Göteborg (SE)**

(56) References cited:
**DE-C1- 3 706 394      DE-U1- 29 911 698**
**US-A- 5 769 489       US-A1- 2004 100 133**
**US-A1- 2004 189 078**

## Description

### TECHNICAL FIELD

The invention relates to seats for vehicles, e.g. private cars, lorries or construction equipment, adapted to absorb a part of the energy associated with a crash, especially in the case of a back collision giving rise to a force working along the longitudinal direction of the vehicle. The invention is in particular related to the build up of the back rest of a seat structure in order to create an evenness of the impact force adapted to the physical conditions of the human body under bending and thereby creating a seat back for reducing the risk of occurrences of injuries, such as whiplash injuries, in case of a collision.

### BACKGROUND ART

In the field of car safety, the development of seats to be adapted to prevent injuries in case of collision is of interest. The construction of the seat and its attachment to the vehicle is considered to be important in many aspects concerning security for the passenger. One specific field of injuries, in which the seat construction is important, is the so called whip-lash injuries. This injury arises as a result of a sudden impact on the spinal vertebrates and serious injuries may arise even at relatively low speeds of collisions, especially in the case of a rear-end collision. In US 5,769,489, which can be considered as closest prior art, it is disclosed how to decrease the number of whip-lash injuries by the use of a seat with an impact absorbing crush zone which deforms in a controlled manner in order to prevent or limit spinal injuries to the passenger. Also US 6,520,577 is discussing the problem with whip-lash injuries and it is disclosed how a mechanism of the seat back is activated when subjected to a force in case of a collision in order to diminish the force applied at the thoracic vertebrae and thereby limit the risk of serious injuries. In US 6,309,018 it is described how the support of the back of the seat is adapted to the human body, especially the neck, by means of a plurality of strips forming a convex structure supporting the neck in order to prevent injuries of the cervical vertebra. US 6,375,262 discloses a seat having an active mechanism which is actuated in the event of a collision which will support the passengers back and neck. In US 6,789,845 and 6,837,541 it is described an active head restraint system in which energy absorbed by the seat from the body is used to activate the headrest for a forward motion. However, even though these systems describes different features for limiting the injuries of the spine in the event of an accident, there is still a need for an improved seat support structure for a seat adapted to support the human body according to its physical properties so as to prevent sudden impacts of shock energy to be released on the spine and thereby causing serious injuries.

## DISCLOSURE OF INVENTION

The invention relates to a support structure for the back rest of a vehicle seat. The purpose of this support structure is to prevent injuries caused by dislocation or overbending of the vertebrates of the spine. The support structure is built up in accordance with the bending possibility of the different parts of the backbone so as to restrict bending beyond a certain limit which might be injurious to the backbone. The backbone, which consists of 24 vertebrates, can be divided into three different main regions wherein the cervical spine comprises the 7 upper vertebrates, the thoracic spine comprises 12 vertebrates in the middle and the lumbar spine comprising the 5 lower vertebrates. These different parts have different maximum flexibility whereof the flexibility of the thoracic spine is rather limited while the cervical and lumbar spines are rather flexible. This invention is directed to meet the physical demand of the thoracic and lumbar spine concerning their possibility to bend within a secure maximum bending. In order to prevent injuries on the spine, which might cause whip-lash injuries, the aim is to provide a support structure which only allows the thoracic and lumbar spine to bend within these limits even in the case of a shock, especially in the event of a rear end collision.

The support structures described herein are thus meant to deform in a controlled manner, when subjected to a load, so as to achieve a desired structure. The unloaded support structure of the seat back may have different forms to be comfortable when a person is seated but shall give the right support to a person sitting in the seat in the case of an accident. By using a deformable structure, which may penetrate partly into the seat back of the seat, the collision forces may be decreased with less risk of contusion injuries as a result. By penetrating partly is meant that the support structure or parts thereof may move backwards in the seat back while still not being detached from its fixation to the seat.

In the following when it is referred to the "upper section" of the support structure it is meant the part of the support structure closest to the head when mounted in the back rest of a seat and intended to mainly support the thoracic spine and, consequently, the "lower section" refers to the part of the support structure closest to the seat cushion and intended to mainly support the lumbar spine when mounted in the back rest.

Furthermore, when referring to the length of the support structure it is meant the extension of the support structure from the upper part of the support structure to the lower part of the support structure. The width of the support structure is referring to the direction perpendicular to the length direction of the support structure and parallel to the plane of the essentially flat support structure.

When it is referred to a support structure being essentially planar or essentially not curved, it is meant a support structure which while affected by a load corresponding to the maximum intended load not may be bent to a bending radius of less than 4 metres in the length direction of the support structure.

The basic idea is to provide a support structure for a back rest which is, at the height of the thoracic spine corresponding to the upper section of the support structure, rather rigid and will stay in an essentially planar configuration or a slightly curved shape even when subjected to a load beyond the normal load of a person sitting and resting against the back rest and the structure at the height of the lumbar spine, corresponding to the lower section of the support structure, will deform when subjected to a load as described above so as to form a shape with a curvature corresponding to a circular segment shape.

In the following, when it is referred to a load, it is generally meant a load beyond the normal load of a person sitting and resting against the back rest, e.g. the load of a body seated in a seat when a car is subject to a rear end collision. The support structure will of course be affected in some way by any amount of a load but the interest is focused on the behaviour of the structure when subjected to abnormal loads and, for easiness, when it is referred to a load in the context of the present description, the meaning is generally referring to a load which is heavier than the load at normal use, e.g. when supporting a persons back, and the loads of interest are suggested to be at least from 100 or 200 Newton and above.

The essential feature is that the bending of the support structure is within the prescribed limitations for the maximum allowed bending of the thoracic respectively the lumbar spine. When performing these calculations, it is necessary to understand that the basic data (bendability between different vertebrates, the size of the vertebrates etc.) is different for different individuals. It is also to be noted that the bendability also is different between different vertebrates in the thoracic spine respectively the lumbar spine even though in most calculations in the present document it has been assumed that the allowed bendability between different vertebrates in the thoracic spine are the same and the allowed bendability between different vertebrates in the lumbar spine are the same. The assumptions made are also based on that the allowed bending of the spine shall be within the neutral zone, i.e. the bending of the spine may be without any (or very low) force applied in order to bend the spine. The vertebrates may bend further as a result of applied forces by for example the muscles in the back so that the vertebrates are somewhat translated with respect to each other and the discs between the vertebrates squeezed a little bit while the bending still is within a limit which is not injurious to the spine. However, when calculating the allowed bendability it has been preferred to use approximations of the limits for bending within the neutral zone as the restriction. This will give an additional safety for individual differences of different persons as well as for the individual differences in the bending between different vertebrates in the same area which have been approximated to have the same bendability.

The upper support section is preferably rotably attached to an upper transversal beam of a frame, which carries the support structure, and the lower support section is preferably pivotally or resiliently connected to a lower transversal beam of the carrying frame. It would also be possible that the connecting of the lower section may perform a translational movement if the lower section is connected to the frame at a location beneath the seat cushion so that the support carrying frame will not interfere with a body moving backwards in the lower region. The upper and lower support sections are preferably firmly connected to each other, i.e. connected so that the bending of the support structure not exceeds the maximum allowed bending in the connecting part.

In case of an accident, when there is a load on the support structure, the support structure seen from the side of the seat, will preferably have a shape reminding of a runner of a sleigh instead of a runner of a rocking chair, i.e. being essentially straight at the uppermost part and having a curvature at its lowermost part.

Hence, the support structure will by this arrangement prevent overbending of the backbone while at the same time absorbing a part of the impact energy by allowing the support structure to collapse in a controlled manner. The structure will preferably be squeezed at its most at the connection between the essentially rigid upper part and the more flexible, lower part or at the lower part near the connection with the upper part in case of an accident.

In order to construct such a support structure, a number of different methods may be used. The most obvious solution is to adapt the stiffness or rigidity of the material forming the support plate so as to bend with the desired curvature for the different regions when subjected to a load. It would also be possible to make the structure of the material different at different parts so as to achieve a differentiated bending property of the material in different areas, e.g. provide the support plate with holes or indentations in a desired pattern or thinner or thicker regions at different locations. Another way would be to use the same material for the whole plate but change the width of the support plate so as to achieve different bending properties at different locations, i.e. a wide portion is more resistant to bending than a narrow portion. Another alternative would be to provide the support plate with a reinforcing structure at the locations where a higher resistance to bending is desired. It would also be possible to vary the stiffness in the different regions by having different resiliency in the suspension of the support plate, e.g. having a multitude of suspensions, fixed to the plate at the sides and fastened to the side beams of the frame wherein the suspensions have different, predetermined resiliency or spring coefficients adapted to suspend the support structure with a force in order to achieve the desired shape when subjected to a force. Hence, there are a lot of different ways to adapt the support plate to achieve the desired resiliency of the support plate.

Even though it is generally stated that there are two main regions having a certain rigidity, the rigidity may vary within these regions as long as they follow the prescribed, allowed bendability.

When constructing the support structure, it is important to decide the right proportions of the support structure and the bending possibility of the spine. It is generally considered that the bending possibility between each vertebrate in the thoracic spine is between 1 and 2 degrees on a 360 degrees scale and the bending possibility between each vertebrate of the lumbar spine is between 5 and 8 degrees. The length of each vertebrate along the longitudinal length of the backbone is considered to be approximately 30 mm for the thoracic vertebrates and about 40 mm for each of the lumbar vertebrates. The actual height of the vertebrates (including half the distance of the space at each side between the vertebrates) differs from about 20 mm for the uppermost vertebrates of the cervical spine to about 45 mm for the lowermost vertebrates of the lumbar region. These numbers are of course different for each individual, especially the length of a person, and in order to achieve the right proportions and stiffness of the support structure a lot of considerations have to be made in order to provide a safe support structure for the majority of people. The support structure could also be subject to individual settings by regulating the seat and support structure when mounted in the seat back.

As already stated above, these numbers are very approximate. However, taking these approximations into consideration, the support structure supporting the lumbar spine will be allowed to be around 2-4 times more curved than the support structure supporting the thoracic spine, preferably around 3 times more curved. This relative curvature is based on the radius of a circle which a curve would form if continued for 360 degrees, i.e. the radius should be 2-4, preferably around 3, times smaller for a circle formed by the curvature of the lumbar support region than for the thoracic support region when the maximum curvature is reached. The support structure should preferably start to deform at a pressure of about 100 to 500 Newton, for example at 200 Newton, and reach its final configuration when it is subjected to a pressure of 1000 to 2500 Newton, preferably 1600 Newton. When subjected to lower forces, the forces are preferably absorbed by the upholstery or covering of the seat or the suspension of the seat while greater forces will mainly be absorbed by the shock absorbing structure of the vehicle such as crash boxes, bumpers, shock absorbers, displacement of the seat or parts thereof.

The actual radius of the minimum allowed curvature of the lumbar spine could be calculated by using the following formula:

$$\sum_{i=1}^{5} (L_i / \alpha_i) \times (360 / (2 \times \pi))$$

wherein $L_i$, is the height of lumbar vertebrate i (including half the space between the adjacent vertebrates) along the longitudinal direction of the vertebrate spine, $\alpha i$ is the allowed angle of bending between lumbar vertebrate i and i+1 and $(360 / (2 \times \pi))$ is the conversion factor to achieve the correct radius for the curvature in the given length entity. The last angle corresponds to the allowed angle between the fifth lumbar vertebrate and the caudal vertebra. This formula will give the mean value for the allowed bending of the lumbar spine. In case it can be assumed that the height of the lumbar vertebrates are 40 mm and the allowed angle is 6 degrees (of 360 for a complete circle) the smallest allowed bending radius would be approximately 0,38 meters.

The formula is also applicable for the calculation of the smallest allowed curvature for the thoracic spine and in this case i should be from 1 to 12 instead and the last angle corresponds to the allowed angle between the twelth thoracic vertebrate and the first lumbar vertebra. For easiness, it can be assumed that the height of the thoracic vertebrates are 30 mm and the allowed angle is 1,5 degrees (of 360 for a complete circle) is valid for all the vertebrates in the formula, the smallest allowed bending radius would be approximately 1,15 meters.

As can be deduced from these calculations, the ratio of the radii is about 3,0. These values are somewhat representative but could be adjusted due to further investigations of the performance of the human spine or other assumptions. However, it is concluded that the ratio of the minimum bending radii should be within the interval of 2-4 times larger for the thoracic spine than for the lumbar spine. However, when constructing the support structure, the ratios of the allowed bending in the different sections may be quite different. As has been discussed above, the upper section of the support plate may remain planar or essentially planar when subjected to a load. In these cases, the radius of curvature of the upper section is from 4 meters (as defined in this text) to infinity (in the case the support structure is planar). Hence, having none or a small curvature of the upper section will most certainly give rise to a greater ratio of the radii of the different sections.

In order to verify that the support structure is within the prescribed limits and will behave as desired when mounted in a seat, there are several ways of testing the structure. One way of testing the support structure is to apply a load evenly distributed along the length of the support structure causing a deformation, which essentially corresponds to a bending, of the support structure. The load may vary for example from 200 Newton up to 3000 Newton in order to sample information of the behaviour of the support structure. As a comparison test, different materials may be tested at a load of 1000 Newton which would be a suitable load where the structure should work. This load may also be applied and evenly distributed along a length corresponding to half the length of the total length of the support structure and centred around the middle point along the length direction of the support structure.

Instead of using an evenly distributed load, the load may be applied at a point, for instance in the middle between the upper and lower fixation points of the support structure. When applying a load at one single point causing a deformation of the support structure, the total load should preferably be less than when it is evenly distributed along the length and test may be done for example from 100 Newton up to 2000 Newton. As a comparison test, different materials may be tested at a load of 500 Newton (applied at a point) which would be a suitable load where the structure should work.

The presumed best way of testing the support structure is in full scale "car to car" test. In this test, the load causing a deformation of the support structure originates from a dummy seated in a vehicle seat. There are a great number of different test dummies which might be used and a preferred one is the Biorid II, Model ARA 001 from Denton ATD INC (www.dentonatd.com) which is commonly used for these kinds of tests. In the set up, a target car is at standstill while another car is hitting the target car in the rear end. A dummy is seated in the target car in a vehicle seat comprising a back rest wherein a support structure is mounted. The velocity of the car hitting the target car is for example 15 - 35 km/h. A velocity of 25 km/h is advisable when performing a comparison test of different support structures. The cars to be used may be any type of car but is preferably personal cars of normal size.

Another feature which usually is considered in the field of support structures for seat backs for preventing whip-lash injuries is the evenness of the support structure. If one vertebrate, or some vertebrates in a row, is supported but there is an intermittent lack of support for one or several vertebrates, there is a risk of translational movement between some of the vertebrates. The maximum allowed translational movement between vertebrates is considered to be 3 mm. In order to prevent such a movement there should not preferably be more than maximum about 20-40 mm, corresponding to the length of the vertebrates, between the support elements of the support structure for the vertebrates. In case the support structure is a continuous plate, plate will form a continuous support element all the way along the length of the support structure and this will not be a problem. It is of course preferred to have a continuous support structure which not only prevents translational movement of the vertebrates relatively each other but also distribute the force in the most optimal way in order to achieve evenness and prevent contusion to overloaded vertebrates.

Still another feature in the respect of preventing injuries is the fixation point of the support structure to the frame, especially of the upper part of the support structure to the upper beam of the frame. In order to avoid that the upper beam of the frame will hit one or several vertebrates at the height of the upper beam while the vertebrates below may be unsupported in the event of a shock, the upper part of the support structure should be fixed so that an essentially even surface is established between the upper beam and the support structure. If there is a gap between the support structure and the frame in the longitudinal direction of the vehicle, i.e. the support structure not being fixed at the front side of the frame which faces the person seated in the seat, the upper beam may hit the person sitting in the seat hardly and injuries may arise as a result of this construction. Likewise, the support structure should preferably be fixed to the upper beam so that there is no gap or a very small gap, at least less than 40 mm but preferably smaller, between the upper beam and the support structure. It should be noted that the described fixation of the support structure to the upper beam also is preferred for the fixation of the support structure to the lower beam but since the lower beam often is placed below the passenger and the allowed bending of the lumbar region of the spine is considerably larger, the fixing of the support plate to the lower beam is less important than the fixing to the upper beam. Even though this arrangement for fixing the structure, i.e. to locate the fixing points of the support structure on the front part of the frame, is discussed specifically for this support structure, it is evident that this way of fixing support structures to the frame is also applicable to other kinds of support structures for the back rest of a vehicle seat.

The support structure would of course work in the same way as described above in the case a seat in a vehicle is turned 90 degrees, e.g. a seat in a van or minibus, and facing either side of the vehicle if the vehicle is subject to a side collision.

BRIEF DESCRIPTION OF DRAWINGS

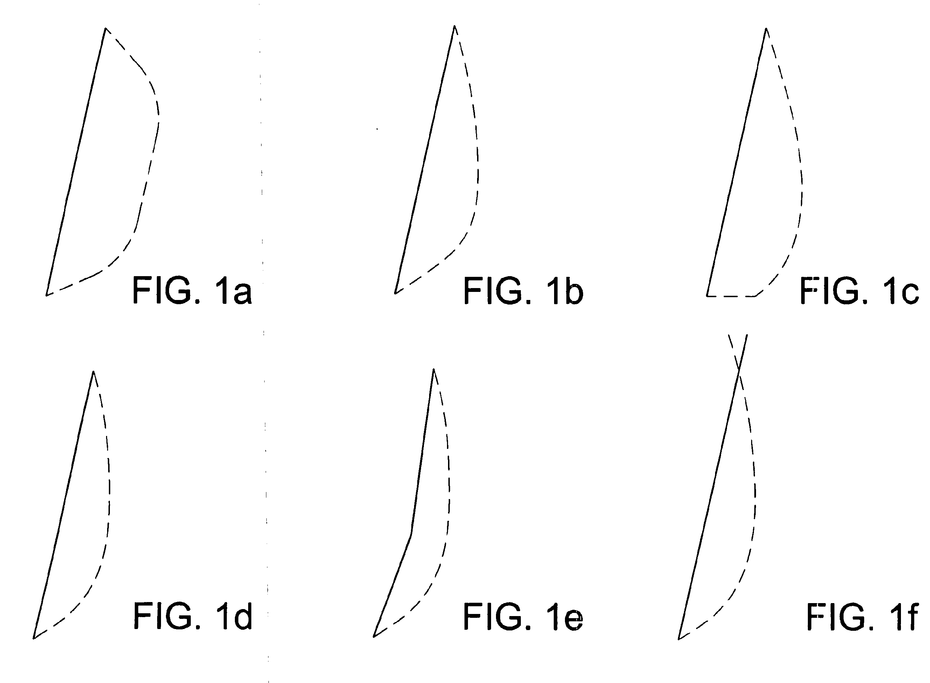

Fig 1 a      The behaviour of a support structure according to prior art when subjected to a heavy load as in the event of an accident

Fig 1 b      The behaviour of a support structure according to a first embodiment of the invention when subjected to a heavy load as in the event of an accident

Fig 1 c      The behaviour of a support structure according to a second embodiment of the invention when subjected to a heavy load as in the event of an accident

Fig 1 d      The behaviour of a support structure according to a third embodiment of the invention when subjected to a heavy load as in the event of an accident

Fig 1 e     The behaviour of a support structure according to a fourth embodiment of the invention when subjected to a heavy load as in the event of an accident

Fig 1 f     The behaviour of a support structure according to a fifth embodiment of the invention when subjected to a heavy load as in the event of an accident

Fig 2     A side view of a vehicle seat provided with a support structure with a person in a seated position.

Fig. 3 a     A support structure according to the invention mounted in a frame

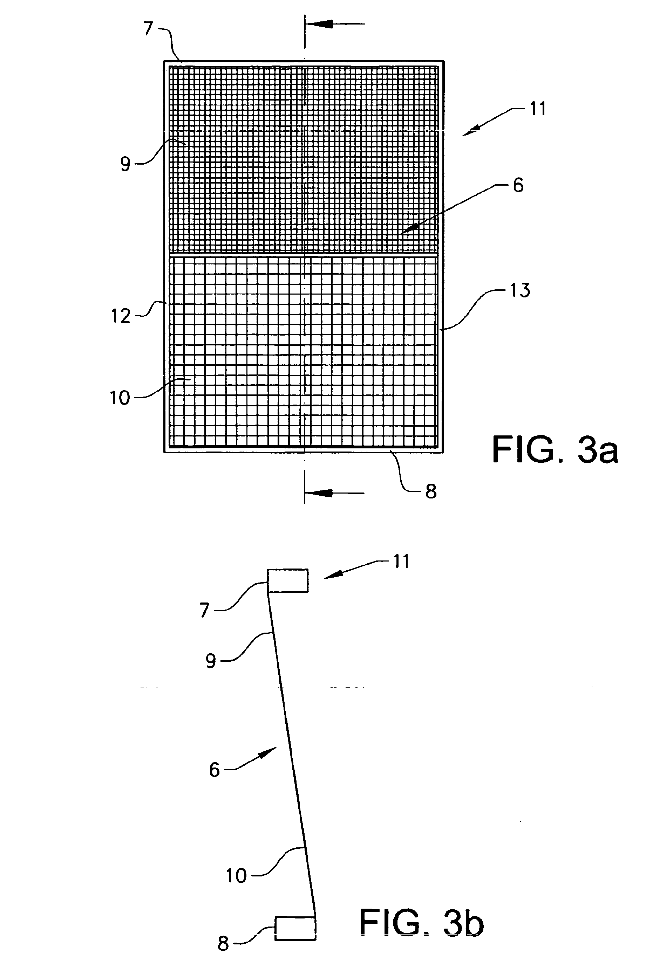

Fig. 3 b     A side view of the support structure in figure 3a as along the intersection line A -- A

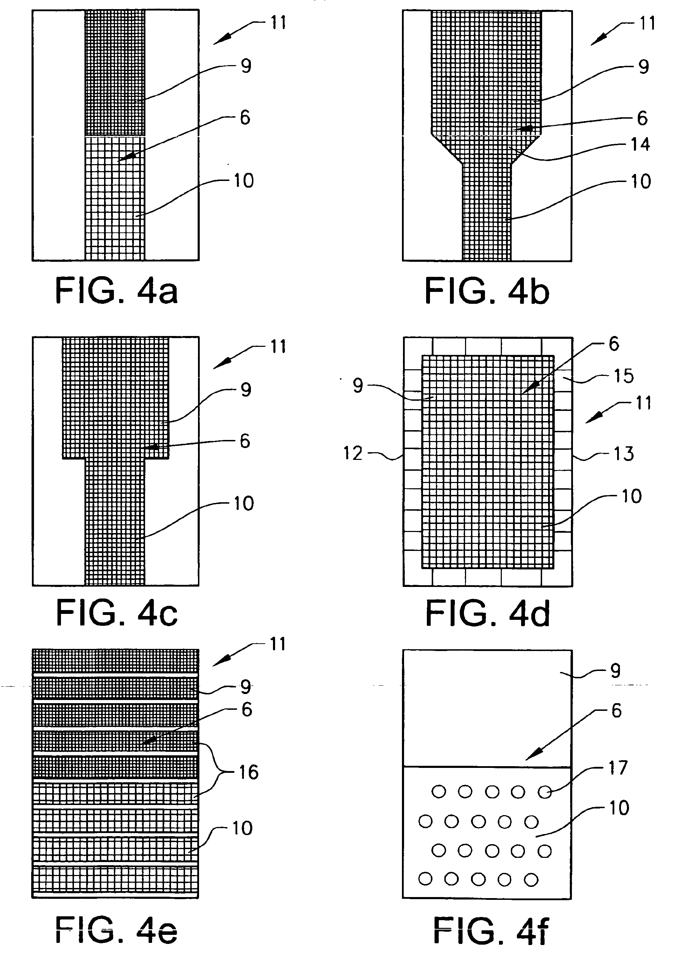

Fig. 4     Different embodiments of the geometry of the support structure:

Fig. 4a,     A continuous support plate covering the middle of the back rest along the whole length of the back rest

Fig. 4b,     A continuous plate with a middle portion being widening from the relatively narrow lower section to the relatively wide upper section.

Fig. 4c     A continuous plate with a wide upper section and a narrow lower section

Fig. 4d     A continuous plate or support structure provided with a multitude of suspension fastenings to the side beams

Fig. 4e     A support structure formed from a multitude of support plates

Fig. 4f,     A continuous support plate provided with holes in the lower part of the support structure

EMBODIMENT(S) OF THE INVENTION

There are numbers of ways to achieve the desired result of the present invention. In the figures 1a-f, a continuous line is representing the state of the support structure, as seen from the side of the seat, when it is unloaded or when a person is sitting in the seat and leaning against the back rest without any additional force. The dashed line represents the state when there is a load working on the backrest, e.g. the force of a body in the seat when the vehicle is subject for a rear end collision. It is also stated that the support structure according to the invention normally is incorporated in the back rest of the seat and usually is provided with upholstery and covering.

In fig. 1a it is shown how a support structure may work today as seen from the side. The support structure today, which the present invention is intended to replace or cooperate with, is commonly the covering and upholstery of the seat. This structure is in some way adapted to absorb a part of the energy by the covering and the upholstery as well as distribute the force of the shock impact. However, when this structure is subjected to a force it will deform without consideration of the limitations of movement of the human body and in particular the limitation of flexibility of the spine. In figure 1 a, the plausible deformation of a seat back depending on its covering and upholstery as support structure is shown. There might of course be other reinforcing structures behind this structure in order to avoid a break through of the body but neither these structures usually consider the above stated problem. In its worst embodiment, the seat may be provided with a cross bar giving rise to a sudden bending of the spine or contusion injuries when hit by a body breaking through the covering.

In figure 1 b it is shown how a first embodiment of the present invention may work. In the event of collision, e.g. a rear end collision, the support structure is adapted to bend according to the physical limits of the backbone to bend without causing any injuries. The upper section being positioned so as to support the thoracic spine is relatively straight while the lower section being positioned so as to support the lumbar spine is considerably more bent. By this arrangement, the support structure in the seat back will absorb some of the shock energy under deformation while at the same time support the backbone in order to avoid whip-lash injuries. Also to be noted, the structure will deform most in the lower part of the seat back which is advantageous in that aspect if the seat is provided with further shock security systems such as bending of the seat back in the rearward direction in case of a collision, there will be a rather long distance which the body may move in the thoracic region while the bending only will contribute with a short distance in the lower regions near the connection to the seat. Hence, by allowing the back to give in most in the lower region, the support structure according to the present invention will, in addition to support the backbone in an anatomically correct manner, also contribute to diminish the shock impact energy in the lower regions of the back rest which otherwise usually is rather stiff.

In figure 1 c, the absorbing of energy in the lower regions is further increased by allowing the support structure at its lowermost fixation point to move essentially longitudinal in a rearward direction, i.e. towards the rear of the vehicle. This may be achieved by a mechanical spring arrangement or hydraulic fluid system which gives rise to a desired force working in the opposite longitudinal direction.

In the figures 1a-c, the support structure is continuous for the whole structure, i.e. the upper, stiffer part is firmly connected to the lower, softer part and both parts may be made from a single plate having different properties in different regions. In case a force is applied to either part, the other part will also be affected. The different structures may be made of the same material or different materials. When the parts are made of the same material, e.g. a sheet of polymeric material or metal, the different regions may have different properties of bendability depending on thickness of the sheet, different reinforcing elements in the material, different structures either on the macro or micro scale or other means for adapting the support structure to achieve the desired curvature in case of an accident. It is of course possible to build up a support structure from calculated values for each of the materials and the calculated impact force working on each part of the support structure but it is preferred to perform crash tests with a test dummy to adapt the calculated values to the reality. As in most cases regarding car security, the behaviour of the vehicle and the shock preventing or limiting means in a crash situation is rather complex and the construction parameters and details of the support structure should be supported by shock tests imitating the reality as far as possible in order to work in a real life accident. One important feature is to manage to achieve a proper boundary layer between the more rigid, upper part and the less rigid, lower part so as to not create an inflexion point which is either to stiff or to loose so that it might give rise to injuries of the spine. Out of this aspect, it might be an advantage to have a region between the upper, stiff region and the lower, less stiff region which gradually changes its bending properties from corresponding to the stiff, upper part to the less stiff, lower part. Such an arrangement is shown in figure 1d where the upper section is essentially planar and stretches a little bit less than half the distance of the support structure. The middle section stretches about a fourth of the length of the support structure and is only slightly curved while the third, lowermost section also stretches about a fourth of the length of the support structure and is about 4 times more curved than the second section. It is obvious that such an arrangement would work in combination with the embodiment shown in figure 1 b or 1c as well.

It is also possible that the upper support structure and the lower support structure are angled in respect of each other in the unloaded position as shown in fig. 1e. It would also be possible that the support is somewhat curved instead or as a complement to the angled configuration. This feature could also be included in any of the embodiments shown in figures 1 b to 1 d.

In figure 1f it is shown that the support structure continues above the upper beam of the frame. The pivotal point is still located at the upper beam. In case of an accident, e.g. a rear end collision, the part of the support structure above the pivotal point will move towards the person sitting in the seat. As commonly mounted in cars today, this part will correspond to the uppermost part of the thoracic spine and/or the cervical spine. In many cases it is desired to have a support structure for this part of the body which acts in a forward motion, i.e. towards a person's head, in order to support the head in order to avoid whip-lash injuries in this part of the spine. This part may be provided with an additional structure which is facing the seated person and is adapted to support the neck and head in an appropriate way. This support structure may be adjustable, for example to be positioned at the right height according to the individual length of a person. It is evident that this embodiment of the invention may work together with anyone of the embodiments described in figures 1b to 1e or any combinations of these earlier described embodiments.

It shall be noted that this figures are only schematic drawings for illustrating the invention in a way that makes it comprehensible. Hence, for instance, the proportions of the different regions may differ depending on where in the seat the structure is located, e.g. at which height the structure starts and ends, and the length of the support structure. In these figures, the proportions of the upper and lower regions corresponds essentially to the proportional length of the thoracic respectively the lumbar spine.

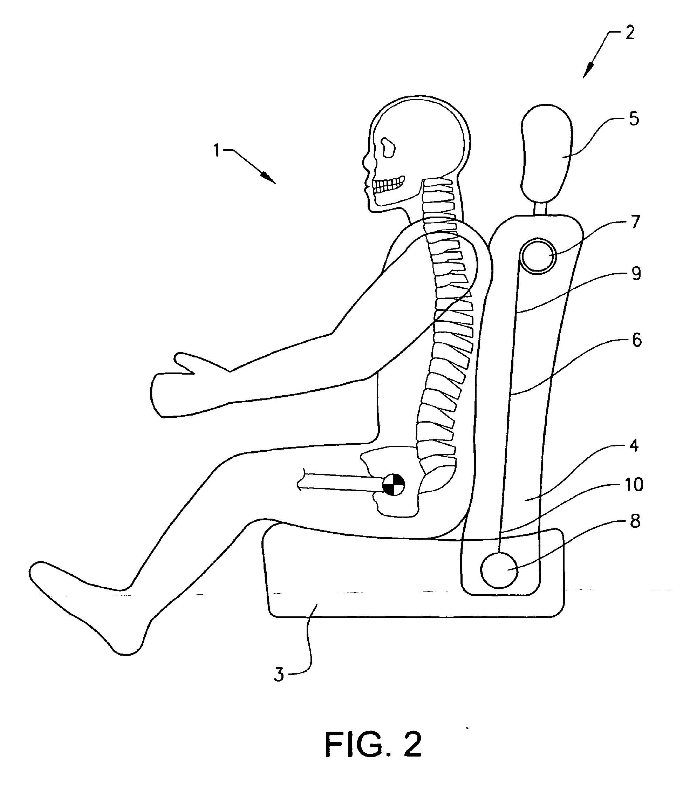

In figure 2, a side view of a person (1) seated in a vehicle seat (2) revealing a part of the skeleton, including the backbone, is shown. The seat (2) comprises a seat cushion (3), a back rest (4) and a head rest (5). The back rest (4) further comprises a support structure (6) fixed to an upper beam (7) at its upper end and to lower beam (8) at its lower end. In the figure, the upper 7 vertebrates (C1-C7) build up the cervical spine, the next 12 vertebrates (T1-T12) build up the thoracic spine and the lowermost 5 vertebrates L1-L5 build up the lumbar spine. The bendability of these vertebrates (in the neutral zone, i.e. essentially without any bending force) corresponds to approximately 6-8 degrees, 1-2 degrees respectively 5-7 degrees. In the following, we will focus mainly on the thoracic and lumbar spine. When seated in a vehicle seat normally, the lumbar spine will start at a distance approximately 0,1 m from the seat cushion. Since each vertebrate has a height of approximately 40 mm and there are 5 vertebrates, the length of the lumbar spine will be around 200 mm and the lumbar spine will end approximately 0,3 meters from the seat. Further on, the 12 thoracic vertebrates will correspond to a length of about 12 times 40 mm, i.e. 480 mm or around 0,5 meters. These numbers are very rough calculated but give an idea about the dimensions of the support plate (6) in which an upper, rigid section (9) shall be placed to support the thoracic spine and the lower, less rigid section (10) shall be placed to support the lumbar spine. In the figure, the upper beam (7) is located at the height of the upper region of the thoracic spine (around the height of T1-T3). Hence, the upper, more rigid section (9) of the support structure (6) should continue downwards for about 50 cm from the upper beam (7). In order to assure that the more rigid section (9) would support also a shorter person, this section (9) may be prolonged in the downwards direction as desired. Furthermore, in order to assure that the upper section (9) will cover the complete length of the thoracic spine for a taller person, the stiffer, upper region (9) of the support structure (6) may be prolonged to extend beyond the pivotal point of the upper beam (7) region as described in figure 1f. It can also be noted in the figure that the upper part of the support structure (6) is fixed to the upper beam (7) at its front side facing the back of the person (1) sitting in the seat. By this arrangement it will be prevented that a vertebrate will be dislocated due to the event that the spine will hit only the upper beam (7) first and only then afterwards hit the support structure (6). At the lower beam (8), the lower, less rigid part (10) of the support structure (6) is fixed to the lower beam (8) in the middle and not at the front side. This arrangement will work well since the beam (8) is located below the upper part of the seat cushion (3) and a person (1) moving backwards into the seat back structure (4) will not hit the beam (8).

In figure 3a, a frame (11) for carrying the support structure (6) is shown. The frame (11) is provided with an upper beam (7), a lower beam (8) and two side beams (12, 13).The frame (11) of the support structure (6) may vary in size and is commonly in the range of 0,5 meters to 1,2 meters in length ( i.e. in the vertical direction when mounted in a seat back)and having a width of 0,4 - 0.7 meters (i.e. in the horizontal direction perpendicular to the longitudinal direction of the vehicle when mounted in a seat back) . Considering that the lower beam (8) of the frame (11) normally is located a little bit below the upper part of the seat cushion (3) and the upper beam (7) will be located at the height of the uppermost vertebrates of the thoracic spine, the break point between the upper, more rigid section (9) and the lower, less rigid section (10) of the support structure (6) will be about in the middle of the length of the frame (11). The width of the support structure (6) may vary from covering the full width of the frame (11), as is the case in the present figure, to be a rather narrow plate located in the middle of the seat (2) (as seen in the width direction) so as to support the spine and having a width of preferably at least 0,1 meter. In case the support structure does not cover the full width it might be either unsupported or supported with another kind of support structure which not interferes harmfully with the spine support structure.

Figure 3b is a side view of the frame (11) in figure 3a along the intersection line A-A. As can be seen in this figure, the uppermost part of the support plate (6) is fixed to the frame at the front part of the upper beam (7) and the lowermost part of the support plate (6) is fixed to the back part of the lower beam (8). As the upper section (9) might be rather rigid, or even essentially stiff, it might be advisory or even necessary to use some kind of pivotal connection to the upper beam (7). In this way, upper, more rigid section (9) of the support structure (6) will be able to turn around an axis formed at the upper beam (7) of the frame (11)

In fig 4a, a continuous support plate (6) covering the middle of a frame (11) along the whole length of the frame (11). The upper section (9) is more rigid than the lower section (10) of the support plate (6). When this frame (11) is mounted in a seat, the support structure (6) will support the middle of the seat and, hence, the human spine in case of an accident. The width may vary as well as the remaining space in the support structure may be provided with another kind of impact absorbing structure. The different, squared pattern in the upper and lower sections (9, 10) just indicate that there are different properties of the material of the support structure (6) in the different sections (9, 10) and do not represent any structural pattern.

In fig 4b, a continuous support plate (6) with a middle portion (14) being widening from the relatively narrow lower section (10) to the relatively wide upper section (9) is fastened to a frame (11). By this arrangement a support structure (6) made of the same material may be more resistant to bending in the upper region (9) by virtue of the different width of the support plate (6) in different regions and comprising a gradual change of the bending resistance in the plate (6).

In fig 4c, a continuous support plate (6) with a wide upper section (9) and a narrow lower section (10) mounted on a frame (11) is shown which is based on the same basic principle as described in figure 4b but with the difference that the stiffness of the plate not being gradually changed.

In fig. 4d, a continuous plate or support structure (6) provided with a multitude of suspension fastenings (15) to the side beams (12, 13) of a frame (11). By using suspension fastenings (15) of different characteristics concerning resiliency to stretch and maximum stretch, it will be possible to construct a support structure (6) being able to bend more in the lower region (10) than in the upper region (9).

In fig 4e, a support structure (6) is formed from a multitude of support plates (16) having different resiliency to bend wherein the plates in the upper region (9) are more resistant to bending than the plates (16) in the lower region (10). In principle, this is corresponding to the arrangement in figure 4d but in this case separate plates are used instead of one, single support plate. The plates (16) may be interconnected so that a load on one of the plates also affects neighbouring plates (16) when subjected to a load, the connecting means could for example be a plate along the longitudinal direction placed in the middle of the frame so that an evenness of the support for the spine is secured and reducing the risk of hurting a single vertebrate due to gaps between the support plates (16). There might of course be more than two different kinds of plates (16) in this structure so as to achieve a more differentiated bendability.

In fig 4f, a continuous support plate (6) provided with holes (17) in the lower section (10) of the support plate (6) is shown. The upper section (9) is without any holes and is thereby more resistant to bending. Hence, the resiliency to bend will be less in the lower part (10) than in the upper part (9) by means of this structure. The holes (17) may of course be placed in different patterns so as to achieve the desired rigidity of the plate. In a preferred way the holes could be absent in the middle region so that a maximum evenness at the intended location of the spine is achieved.

The means for changing the bendability in the support structure shown in figures 4a-f may of course be combined if desired or combined with other means such as using reinforcing elements, using different thickness of the support material, using an artificial spine behind the support plate which allows the support plate to bend as the artificial spine permits or other suitable means. There are still other ways to reach the desired effect of having different bendability in different regions which could be used by the skilled person in the art to reach the desired effect of this inventive idea which not are shown herein. It would of course also be possible to give the support structure different shapes than the ones shown herein.

**Claims**

1. A support structure (6) for a back rest (4) of a vehicle seat (2), said support structure (6) comprises a first, upper section (9) and a second, lower section (10) which upper section (9) is intended to support the thoracic spine and which lower section (10) is intended to support the lumbar spine, **characterized in that** the first, upper section (9) is more rigid than said lower, second section (10) so that, in the event the support structure (6) is subjected to a load, the support structure will deform in such a way that the radius of curvature of the lower section (10) is smaller than the radius of curvature of the upper section (9) when the support structure (6) is subjected to said load.

2. A support structure according to claim 1 **characterized in that** both the upper (9) and the lower (10) support sections are adapted to deform into shapes of essentially circular segments when subjected to said load.

3. A support structure according to claim 2 **characterized in that** the lower section (10) has a radius of curvature which is at least 2 times smaller than the radius of curvature of the upper section (9) when subjected to said load.

4. A support structure according to claim 2 or 3 **characterized in that** the radius of curvature of the upper section (9) is between 1 and 4 meters when subjected to said load.

5. A support structure according to any of claims 2-4 **characterized in that** the radius of curvature of the lower section (10) is between 2 to 8 times smaller when the support structure is subjected to said load.

6. A support structure according to any of claims 2-5 **characterized in that** the radius of curvature of the upper section (9) of the support structure (6) is between 1 and 3 meters, the radius of curvature of the lower section (10) of the support structure (6) is between 0,4 and 1 meters, said radius of curvature of the upper section (9) being 2-4 times longer than said radius of curvature of the lower section (10) when said load causing a deformation of the support structure is a load which deforms the support structure (6) to its maximum, intended deformation.

7. A support structure according to claim 1 **characterized in that** the upper section (9) comprises an essentially rigid plate which essentially do not bend when subjected to said load

8. A support structure according to claim 7 **characterized in that** the radius of curvature of the lower section (10) of the support structure (6) is between 0,3 - 2 meters, preferably between 0,4 -0,6 meters when the support structure (6) is subjected to said load.

9. A support structure according to any preceding claim **characterized in that** the upper (9) and lower (10) support sections are connected to each other so that a pressure on one of the sections (9, 10) will affect also the other section (9, 10).

10. A support structure (6) according to any preceding claims **characterized in that** it further comprises a third, middle section (14) having a rigidity in between the rigidity of the first, upper section (9) and the second, lower section (10).

11. A support structure (6) according to claim 10 **characterized in that** the rigidity of the third middle section (14) is stiffer near the first, upper section (9) than near the second, lower section (10).

12. A support structure (6) according to any preceding claim **characterized in that** the support structure (6) is continuous for at least 0.5 meters wherein the maximum distance between support elements of the support structure (6) in the longitudinal direction is less than 40 mm, preferably less than 30 mm, at most along a longitudinal line in the support structure.

13. A support structure (6) according to any preceding claim **characterized in that** the support structure is connected to a frame (11), said structure (6) being fastened to the frame (11) so that the connection is essentially in the same plane as a front side of the support frame (11) at the location of connection of the upper section (9) of the support structure (6) to an upper beam (7) of the frame.

14. A support structure according to any preceding claim **characterized in that** the upper section (9) of the support structure (6) is pivotally connected to a frame (11).

15. A support structure according to any of claims 1-5 or 7-14
    **characterized in that** said load causing a deformation of the support structure is a load of 1000 Newton applied and evenly distributed along the length of the support structure

16. A support structure according to any of claims 1-5 or 7-14
    **characterized in that** said load causing a deformation of the support structure is a load of 500 Newton applied at a point in the middle between the upper and lower fixation points of the support structure.

17. A support structure according to any of claims 1-5 or 7-14
    **characterized in that** said load causing a deformation of the support structure is a load of 1000 Newton is applied and evenly distributed along a length corresponding to half the length of the total length of the support structure and centred around the middle point of the support structure.

18. A support structure according to any of claims 1-5 or 7-14
    **characterized in that** said load causing a deformation of the support structure is a load of a dummy of the type Biorid II or similar in a car to car rear end collision wherein said dummy is seated in a vehicle seat in a target car which is at standstill, said vehicle seat comprising a back rest provided with the support structure, and the other car is hitting the target vehicle in the rear end at a velocity of 25 km/h.

19. A vehicle seat (2) comprising a support structure (6) according to any of claims 1-18

20. A vehicle seat (2) according to claim 19 **characterized in that** the length of the support structure is between 0,5 meters and 1,2 meters.

21. A vehicle seat according to claim 19 or 20 **characterized in that** the width of the support structure is 0,1 m - 0,7 meters.

22. A vehicle seat (2) according to anyone of claims 19-21 **characterized in that** the upper, more rigid section (9) is at least 0,4 meters.

23. A vehicle seat (2) according to anyone of claims 19-22 **characterized in that** the upper, more rigid section (9) starts at least 25 cm, preferably 30 cm, above a seat cushion (3) of the seat (2) and stretches at least 35 cm, preferably at least 50 cm, in the upwards direction therefrom.

## Patentansprüche

1. Stützstruktur (6) für eine Rückenlehne (4) eines Fahrzeugsitzes (2), wobei die Stützstruktur (6) eine erste, obere Sektion (9) und eine zweite, untere Sektion (10) umfasst, welche obere Sektion (9) die Brustwirbelsäule stützen soll, und welche untere Sektion (10) die Lendenwirbelsäule stützen soll, **dadurch gekennzeichnet, dass** die erste, obere Sektion (9) steifer ist als die untere, zweite Sektion (10), damit sich, falls die Stützstruktur (6) einer Last ausgesetzt wird, die Stützstruktur derart verformt, dass der Krümmungsradius der unteren Sektion (10) kleiner ist als der Krümmungsradius der oberen Sektion (9), wenn die Stützstruktur (6) der Last ausgesetzt ist.

2. Stützstruktur gemäß Anspruch 1, **dadurch gekennzeichnet, dass** sich sowohl die obere (9) als auch die untere (10) Stützsektion in Gestalten von im Wesentlichen kreisförmigen Segmenten verformen können, wenn sie der Last ausgesetzt sind.

3. Stützstruktur gemäß Anspruch 2, **dadurch gekennzeichnet, dass** die untere Sektion (10) einen Krümmungsradius aufweist, der zumindest zweimal kleiner ist als der Krümmungsradius der oberen Sektion (9), wenn sie der Last ausgesetzt sind.

4. Stützstruktur gemäß Anspruch 2 oder 3, **dadurch gekennzeichnet, dass** der Krümmungsradius der oberen Sektion (9) zwischen 1 und 4 Meter beträgt, wenn sie der Last ausgesetzt ist.

5. Stützstruktur gemäß einem der Ansprüche 2-4, **dadurch gekennzeichnet, dass** der Krümmungsradius der unteren Sektion (10) zwischen zwei- bis achtmal kleiner ist, wenn die Stützstruktur der Last ausgesetzt ist.

6. Stützstruktur gemäß einem der Ansprüche 2-5, **dadurch gekennzeichnet, dass** der Krümmungsradius der oberen Sektion (9) der Stützstruktur (6) zwischen 1 und 3 Meter beträgt, der Krümmungsradius der unteren Sektion (10) der Stützstruktur (6) zwischen 0,4 und 1 Meter beträgt, der Krümmungsradius der oberen Sektion (9) zwei- bis viermal länger ist als der Krümmungsradius der unteren Sektion (10), wenn die eine Verformung der Stützstruktur bedingende Last eine Last ist, welche die Stützstruktur (6) auf eine maximale, vorgesehene Verformung verformt.

7. Stützstruktur gemäß Anspruch 1, **dadurch gekennzeichnet, dass** die obere Sektion (9) eine im Wesentlichen steife Platte umfasst, die sich im Wesentlichen nicht biegt, wenn sie der Last ausgesetzt ist.

8. Stützstruktur gemäß Anspruch 7, **dadurch gekennzeichnet, dass** der Krümmungsradius der unteren Sektion (10) der Stützstruktur (6) zwischen 0,3-2 Meter, bevorzugt zwischen 0,4-0,6 Meter, beträgt, wenn die Stützstruktur (6) der Last ausgesetzt ist.

9. Stützstruktur gemäß einem der vorangegangenen Ansprüche, **dadurch gekennzeichnet, dass** die obere (9) und die untere (10) Stützsektion derart miteinander verbunden sind, dass ein Druck an einer der Sektionen (9, 10) ebenso die andere Sektion (9, 10) beeinflusst.

10. Stützstruktur (6) gemäß einem der vorangegangenen Ansprüche, **dadurch gekennzeichnet, dass** sie weiter eine dritte, mittlere Sektion (14) umfasst, die eine Steifigkeit zwischen der Steifigkeit der ersten, oberen Sektion (9) und der zweiten, unteren Sektion (10) aufweist.

11. Stützstruktur (6) gemäß Anspruch 10, **dadurch gekennzeichnet, dass** die Steifigkeit der dritten, mittleren Sektion (14) nahe der ersten, oberen Sektion (9) stabiler ist als nahe der zweiten, unteren Sektion (10).

12. Stützstruktur (6) gemäß einem der vorangegangenen Ansprüche, **dadurch gekennzeichnet, dass** die Stützstruktur (6) über zumindest 0,5 Meter kontinuierlich ist, wobei der maximale Abstand zwischen Stützelementen der Stützstruktur (6) in der Längsrichtung weniger als 40 mm, bevorzugt weniger als 30 mm, zumeist entlang der Längslinie der Stützstruktur ist.

13. Stützstruktur (6) gemäß einem der vorangegangenen Ansprüche, **dadurch gekennzeichnet, dass** die Stützstruktur mit einem Rahmen (11) verbunden ist, wobei die Struktur (6) derart am Rahmen (11) befestigt ist, dass die Verbindung im Wesentlichen in der gleichen Ebene wie die Vorderseite des Stützrahmens (11) am Ort der Verbindung der oberen Sektion (9) der Stützstruktur (6) mit einem oberen Balken (7) des Rahmens ist.

14. Stützstruktur gemäß einem der vorangegangenen Ansprüche, **dadurch gekennzeichnet, dass** die obere Sektion (9) der Stützstruktur (6) mit einem Rahmen (11) schwenkbar verbunden ist.

15. Stützstruktur gemäß einem der Ansprüche 1-5 oder 7-14, **dadurch gekennzeichnet, dass** die eine Verformung der Stützstruktur bedingende Last eine Last von 1000 Newton ist, die entlang der Länge der Stützstruktur aufgebracht und gleichmäßig verteilt ist.

16. Stützstruktur gemäß einem der Ansprüche 1-5 oder 7-14, **dadurch gekennzeichnet, dass** die eine Verformung der Stützstruktur bedingende Last eine Last von 500 Newton ist, die an einem Punkt in der Mitte zwischen dem oberen und unteren Befestigungspunkt der Stützstruktur aufgebracht wird.

17. Stützstruktur gemäß einem der Ansprüche 1-5 oder 7-14, **dadurch gekennzeichnet, dass** die eine Verformung der Stützstruktur bedingende Last eine Last von 1000 Newton ist, die entlang einer der halben Länge der Gesamtlänge der Stützstruktur entsprechenden Länge aufgebracht und gleichmäßig verteilt, und um den mittleren Punkt der Stützstruktur zentriert ist.

18. Stützstruktur gemäß einem der Ansprüche 1-5 oder 7-14, **dadurch gekennzeichnet, dass** die eine Verformung der Stützstruktur bedingende Last eine Last eines Dummies nach der Art Biorid II oder ähnliches in einem Automobil auf eine Automobilrückendenkollision ist, wobei der Dummy in einen Fahrzeugsitz in einem Zielautomobil gesetzt wird, das still steht, wobei der Fahrzeugsitz eine mit der Stützstruktur versehene Rückenlehne umfasst, und das andere Automobil das Zielfahrzeug am hinteren Ende mit einer Geschwindigkeit von 25 km/h trifft.

19. Fahrzeugsitz (2) umfassend eine Stützstruktur (6) gemäß einem der Ansprüche 1-18.

20. Fahrzeugsitz (2) gemäß Anspruch 19, **dadurch gekennzeichnet, dass** die Länge der Stützstruktur zwischen 0,5 Meter und 1,2 Meter beträgt.

21. Fahrzeugsitz gemäß Anspruch 19 oder 20, **dadurch gekennzeichnet, dass** die Breite der Stützstruktur 0,1 m bis 0,7 Meter beträgt.

22. Fahrzeugsitz (2) gemäß einem der Ansprüche 19-21, **dadurch gekennzeichnet, dass** die obere, steifere Sektion (9) zumindest 0,4 Meter beträgt.

23. Fahrzeugsitz (2) gemäß einem der Ansprüche 19-22, **dadurch gekennzeichnet, dass** die obere, steifere Sektion (9) bei zumindest 25 cm, bevorzugt 30 cm, oberhalb eines Sitzkissens (3) des Sitzes (2) beginnt und sich zumindest 35 cm, bevorzugt zumindest 50 cm, in der Hochwärtsrichtung hiervon erstreckt.

**Revendications**

1. Structure de support (6) pour un dossier (4) de siège de véhicule (2), ladite structure de support (6) comprend une première section, supérieure (9) et une deuxième section, inférieure (10), laquelle section supérieure (9) est destinée à supporter la colonne dorsale et laquelle section inférieure (10) est destinée à supporter la colonne lombaire, **caractérisée en ce que** la première section, supérieure (9) est plus rigide que la deuxième section, inférieure (10) de sorte que, si la structure de support (6) est soumise à une charge, la structure de support se déforme de manière que le rayon de courbure de la section inférieure (10) soit plus petit que le rayon de courbure de la section supérieure (9) lorsque la structure de support (6) est soumise à ladite charge.

2. Structure de support selon la revendication 1, **caractérisée en ce qu'**autant les sections de support supérieure (9) et inférieure (10) sont adaptées pour se déformer en formes de segments essentiellement circulaires lorsqu'elles sont soumises à ladite charge.

3. Structure de support selon la revendication 2, **caractérisée en ce que** la section inférieure (10) a un rayon de courbure qui est au moins 2 fois plus petit que le rayon de courbure de la section supérieure (9) lorsqu'elle est soumise à ladite charge.

4. Structure de support selon la revendication 2 ou 3, **caractérisée en ce que** le rayon de courbure de la section supérieure (9) mesure 1 à 4 mètres lorsque celle-ci est soumise à ladite charge.

5. Structure de support selon l'une quelconque des revendications 2 à 4, **caractérisée en ce que** le rayon de courbure de la section inférieure (10) est 2 à 8 fois plus petit lorsque la structure de support est soumise à ladite charge.

6. Structure de support selon l'une quelconque des revendications 2 à 5, **caractérisée en ce que** le rayon de courbure de la section supérieure (9) de la structure de support (6) mesure 1 à 3 mètres, le rayon de courbure de la section inférieure (10) de la structure de support (6) mesure 0,4 à 1 mètre, ledit rayon de courbure de la section supérieure (9) étant 2 à 4 fois plus grand que ledit rayon de courbure de la section inférieure (10) lorsque ladite charge provoquant une déformation de la structure de support est une charge qui déforme la structure de support (6) à sa déformation maximale voulue.

7. Structure de support selon la revendication 1, **caractérisée en ce que** la section supérieure (9) comprend une plaque essentiellement rigide qui ne fléchit essentiellement pas lorsqu'elle est soumise à ladite charge.

8. Structure de support selon la revendication 7, **caractérisée en ce que** le rayon de courbure de la section inférieure (10) de la structure de support (6) mesure 0,3 à 2 mètres, de préférence 0,4 à 0,6 mètre lorsque la structure de support (6) est soumise à ladite charge.

9. Structure de support selon l'une quelconque des revendications précédentes, **caractérisée en ce que** les sections supérieure (9) et inférieure (10) sont raccordées l'une à l'autre de sorte qu'une pression appliquée sur l'une des sections (9, 10) affecte également l'autre section (9, 10).

10. Structure de support (6) selon l'une quelconque des revendications précédentes, **caractérisée en ce qu'**elle comprend en outre une troisième section, centrale (14) ayant une rigidité comprise entre la rigidité de la première section, supérieure (9) et la deuxième section, inférieure (10).

11. Structure de support (6) selon la revendication 10, **caractérisée en ce que** la rigidité de la troisième section centrale (14) est plus forte à proximité de la première section supérieure (9) qu'à proximité de la deuxième section inférieure (10).

12. Structure de support (6) selon l'une quelconque des revendications précédentes, **caractérisée en ce que** la structure de support (6) est continue sur au moins 0,5 mètre, dans laquelle la distance maximale entre les éléments de support de la structure de support (6) dans la direction longitudinale est inférieure à 40 mm, de préférence inférieure à 30 mm, au maximum le long d'une ligne longitudinale dans la structure de support.

13. Structure de support (6) selon l'une quelconque des revendications précédentes, **caractérisée en ce que** la structure de support est raccordée à un châssis (11), ladite structure (6) étant fixée au châssis (11) de sorte que le raccordement se fasse essentiellement dans le même plan qu'un côté avant du châssis de support (11) à l'emplacement du raccordement de la section supérieure (9) de la structure de support (6) à une poutrelle supérieure (7) du châssis.

14. Structure de support selon l'une quelconque des revendications précédentes, **caractérisée en ce que** la section supérieure (9) de la structure de support (6) est raccordée en pivotement à un châssis (11).

**15.** Structure de support selon l'une quelconque des revendications 1 à 5 ou 7 à 14, **caractérisée en ce que** ladite charge provoquant une déformation de la structure de support est une charge de 1000 newtons appliquée et distribuée de manière égale sur la longueur de la structure de support.

**16.** Structure de support selon l'une quelconque des revendications 1 à 5 ou 7 à 14, **caractérisée en ce que** ladite charge provoquant une déformation de la structure de support est une charge de 500 newtons appliquée en un point intermédiaire entre les points de fixation supérieur et inférieur de la structure de support.

**17.** Structure de support selon l'une quelconque des revendications 1 à 5 ou 7 à 14, **caractérisée en ce que** ladite charge provoquant une déformation de la structure de support est une charge de 1000 newtons appliquée et distribuée de manière égale sur une longueur correspondant à la moitié de la longueur totale de la structure de support et centrée autour du point du milieu de la structure de support.

**18.** Structure de support selon l'une quelconque des revendications 1 à 5 ou 7 à 14, **caractérisée en ce que** ladite charge provoquant une déformation de la structure de support est une charge d'un mannequin du type Biorid II ou similaire lors d'une collision par l'arrière entre voitures, dans laquelle ledit mannequin est assis sur un siège de véhicule d'une voiture cible qui est à l'arrêt, ledit siège de véhicule comprenant un dossier équipé de la structure de support, et où l'autre voiture heurte le véhicule cible à l'extrémité arrière à une vitesse de 25 km/h.

**19.** Siège de véhicule (2) comprenant une structure de support (6) selon l'une quelconque des revendications 1 à 18.

**20.** Siège de véhicule (2) selon la revendication 19, **caractérisé en ce que** la longueur de la structure de support est entre 0,5 mètre et 1,2 mètre.

**21.** Siège de véhicule selon la revendication 19 ou 20, **caractérisé en ce que** la largeur de la structure de support est de 0,1 m à 0,7 mètre.

**22.** Siège de véhicule (2), selon l'une quelconque des revendications 19 à 21, **caractérisé en ce que** la section supérieure, plus rigide (9) mesure au moins 0,4 mètre.

**23.** Siège de véhicule (2), selon l'une quelconque des revendications 19 à 22, **caractérisé en ce que** la section supérieure plus rigide (9) part d'au moins 25 cm, de préférence de 30 cm, au-dessus d'un coussin (3) du siège (2) et s'étend d'au moins 35 cm, de préférence d'au moins 50 cm vers le haut à partir de celui-ci.

FIG. 1a

FIG. 1b

FIG. 1c

FIG. 1d

FIG. 1e

FIG. 1f

EP 1 803 605 B1

FIG. 2

FIG. 3a

FIG. 3b

FIG. 4a

FIG. 4b

FIG. 4c

FIG. 4d

FIG. 4e

FIG. 4f

## REFERENCES CITED IN THE DESCRIPTION

### Patent documents cited in the description

- US 5769489 A
- US 6520577 B
- US 6309018 B
- US 6375262 B
- US 6789845 B
- US 6837541 B